# EUROPEAN PATENT APPLICATION

(11) **EP 4 838 000 A1**
(43) Date of publication of application: **11.11.2026**
(21) Application number: 25175237.4
(22) Date of filing: 09.05.2025
(51) Int. Cl.: C25B 15/02, C25B 1/04, H02J 3/12, H02J 3/14, H02M 1/32

(54) **CONTROLLING OF AN ELECTROLYZING PLANT HAVING PLURAL ELECTROLYZING CELLS**

(71) Applicant: Siemens Energy Global GmbH & Co. KG, 81739 München (DE)
(72) Inventor: Craciun, Bogdan, 91052 Erlangen (DE); Czichon, Jens Christian, 59494 Soest (DE); Geck, Ulf-André, 91074 Herzogenaurach (DE); Schumann, Sven, 91452 Wilhermsdorf (DE)

(57) **Abstract**

The invention relates to a method of controlling an electrolyzing plant (76) having plural electrolyzing cells (14) providing an electrolyzing process, wherein the electrolyzing plant receives electric power from an electric power network (12) deploying an alternating voltage, wherein a transformer (82) has a primary winding (84) connected with the electric power network and a secondary winding (86, 88) connected with an AC side (22) of an electric converter (20), wherein a DC side (24) of the electric converter provides DC electrolyzing power, wherein the converter establishes energy conversion by operating transistors (44) in a switch mode, wherein a crowbar circuit (56) connected with the AC side is triggered by a trigger signal. A sensor device (90) configured to sense an alternating secondary voltage or an alternating secondary current provides a sensor signal, and a crowbar control apparatus (78) provides the trigger signal.

## Description

The invention relates to a method of controlling an electrolyzing plant having plural electrolyzing cells, especially configured to electrolyze water by providing an electrolyzing process, wherein the electrolyzing cells perform the electrolyzing process in response to being subjected to a DC electrolyzing power, wherein the electrolyzing plant is supplied with electric power received via a point of connection of the electrolyzing plant connected with an electric power network, wherein the electric power network deploys an alternating voltage for providing the electric power, wherein a primary winding of a transformer of the electrolyzing plant is connected with the point of connection, in order to be subjected to the alternating voltage, wherein at least one secondary winding of the transformer provides an alternating secondary voltage, wherein an AC side of at least one electric converter of the electrolyzing plant is electrically connected with the at least one secondary winding in order to receive the electric power, wherein a DC side of at least one electric converter connected with the electrolyzing cells provides the DC electrolyzing power in response to the AC side receiving the electric power, wherein the at least one electric converter establishes energy conversion from the AC side to the DC side by operating at least one transistor in a switch mode, wherein at least one crowbar circuit connected with the AC side of the at least one electric converter is triggered by a trigger signal. The invention also relates to an electrolyzing plant having plural electrolyzing cells, especially configured to electrolyze water by providing an electrolyzing process, wherein the electrolyzing cells perform the electrolyzing process in response to being subjected to a DC electrolyzing power, a point of connection configured to be connected with an electric power network, wherein the electric power network deploys an alternating voltage for providing the electric power, in order to supply the electrolyzing plant with electric power received via the point of connection, a transformer having a primary winding connected with the point of connection, in order to be subjected to the alternating voltage, and at least one secondary winding providing an alternating secondary voltage, at least one electric converter having an AC side connected with the at least one secondary winding in order to receive the electric power, wherein the DC side is connected with the electrolyzing cells and provides the DC electrolyzing power in response to the AC side receiving the electric power, wherein the at least one electric converter has at least one transistor operated in a switch mode in order to establish energy conversion from the AC side to the DC side, and at least one crowbar circuit connected with the AC side of the at least one electric converter, wherein the at least one crowbar circuit is configured to be triggered by a trigger signal.

Methods of controlling electrolyzing plants, for instance, for producing hydrogen and oxygen by electrolyzing of water in an electrolyzing process, and electrolyzing plants are well known in the state of the art, which is why specific references about the state of the art need not to be cited. The invention relates to objects providing an electrolyzing process, which are used, for example, for producing hydrogen and oxygen by electrolyzing of water or the like. The following considerations can be also applied to other such electrolyzing processes, respectively.

Electrolysis itself is provided by the plural electrolyzing cells. A group of the electrolyzing cells may be arranged such as to form one or more electrolyzing modules. One or more electrolyzing modules may form an electrolyzing device. The electrolyzing plant may comprise one or more electrolyzing modules.

The electrolyzing cells perform the electrolyzing process in response to being subjected to the DC electrolyzing power. The electrolyzing cells may be arranged at least partially as a stack. The DC electrolyzing power may deploy a DC electrolyzing voltage and a DC electrolyzing current. Especially, when the electrolyzing cells are arranged in one or more stacks, a specific stack may be subjected to the electrolyzing power. The electrolyzing cells may be electrically connected at least partially in series and/or in parallel. An electric connection of the electrolyzing cells may be provided such that at least some, or perhaps all, of the electrolyzing cells are subjected to a respective portion of a DC voltage or the DC electrolyzing voltage, respectively, subjected to the electrolyzing cells. The operation of generic electrolyzing cells as well as the stack, for instance, for the use of electrolyzing of water, are well-known to those skilled in the art, such as, for instance, disclosed by DE 197 29 529 C1. The generic function of electrolysis, especially electrolysis of water, is also well known to those skilled in the art, which is why it is refrained from further detailed explanation in this specification.

During the electrolyzing process, when the electrolyzing cells are subjected to the required DC electrolyzing power, especially the DC electrolyzing voltage, the electrolyzing cells respond with the DC electrolyzing current flow. Especially with regard to the electrolyzing of water, during the electrolyzing process, water is consumed, and hydrogen and oxygen are produced. A value of the DC electrolyzing voltage usually may depend on the number of electrolyzing cells being connected in series inside of the at least one stack. Generally, the electrolyzing cells of one stack are usually connected in series. Therefore, the DC current flow may depend on the applied DC voltage and the characteristics of the electrolyzing cells such as, for instance, electrical resistance, electrical impedance, aging and/or the like, of the series-connected electrolyzing cells. However, in some exemplary embodiments having a different design, the electrolyzing DC current flow may also depend on a number of electrolyzing cells being connected in parallel if applicable and/or a specific design of each of the electrolyzing cells.

Usually, the electrolyzing plant requires a respective high-power power supply during the electrolyzing process. For this purpose, the electrolyzing plant may have a point of connection (PoC), wherein, at the point of connection, the electrolyzing plant is electrically connected with the electric power network. It should be noted that the conditions for establishing the electrolyzing process by the electrolyzing cells of the electrolyzing plant are not easy to manage which is why it is usually an intention of an operator of the electrolyzing plant to maintain a specific processing condition and to avoid large and/or fast amendments of this condition. Therefore, controlling the electrolyzing process of the electrolyzing cells, in order to support stability of the electric power network, should consider these requirements for supplying the electrolyzing plant with electric energy, on the one hand. Controlling can also be at least partially provided by a respective apparatus of the electrolyzing plant. On the other hand, network requirements of the electric power network also need to be considered, such as, for example, harmonics, power factor, low voltage condition, high voltage condition, frequency deviation, and/or the like. Usually, the electrolyzing plant requires a high power consumption, for instance, causing an AC current of the electric power network in a range of about single-digit kA through about low double-digit kA.

The electrolyzing plant may have an internal power network, which is connected with the point of connection. Especially, the internal power network may receive electric energy from the electric power network and transmit the electric energy at least to the electrolyzing cells. In this regard, it should be noted that the electrolyzing plant, especially the internal power network, usually has at least one electric converter, for instance, a rectifying device, providing an electrical coupling between the point of connection, in turn connected with the electric power network, and the electrolyzing cells. The electrolyzing cells need to be supplied with DC voltage, whereas, usually, the electric power network provides an AC voltage, especially, a three-phase AC voltage. Therefore, the electrolyzing plant has at least one electric converter, which receives the AC voltage and, in response, provides the DC electrolyzing voltage, or DC electrolyzing power, respectively. Moreover, the electrolyzing plant, especially the internal power network, usually has a transformer.

For the purpose of rectifying as such, the electric converter may be of the self-commutated type, which may have at least one transistor as switching element such as, for example, an insulated gate bipolar transistor (IGBT), a field effect transistor (FET) such as, for instance, metal oxide semiconductor field effect transistor (MOSFET), and/or the like, respectively. It should be further considered that, for a specific transistor operating as switching element, usually a flyback diode may be provided, which is connected in parallel to the transistor. The flyback diode may be comprised by the switching element. The switching elements can be controlled by a converter control apparatus of the electric converter, in order to adjust a specific electric power to be supplied to the electrolyzing cells. The converter control apparatus can be in communication or at least partially integral with a plant control apparatus for controlling the electrolyzing plant.

Usually, the electric power of the electric power network is provided at the point of connection, which is configured to be connected with an electric power network. The electric power network deploys an alternating voltage for providing the electric power, in order to supply the electrolyzing plant with electric power received via the point of connection. Usually, the electrolyzing plant has a transformer having a primary winding connected with the point of connection so that the primary winding is subjected to the alternating voltage of the electric power network. The transformer has at least one secondary winding providing an alternating secondary voltage, wherein the at least one electric converter having an AC side connected with the at least one secondary winding in order to receive the electric power.

The primary winding may have at least two taps connected with an on-load-tap-changer (OLTC) of the transformer. Usually, the primary winding has more than only two taps. So, the on-load-tap-changer, which is controlled by a tap-changer-control-apparatus of the electrolyzing plant, can be operated to adapt the primary winding dependent on a value of the alternating voltage at the point of connection. For this purpose, the on-load-tap-changer can be controlled to activate a respective tap of the primary winding so that a reliable energy supply can be achieved. As fas as value of the alternating voltage at the point of connection varies, it is possible by respective control of the on-load-tap-changer to at least partially compensate the variation by changing the tap to be used.

It should be further noted that a short-circuit event or an overcurrent event on the DC side may be critical for electric converters having switching elements based on transistors such as insulated gate bipolar transistors (IGBT). Such an evens may appear when a substantial failure appears at the DC side, for instance, a electric arc event on the DC enery distribution network of the internal power network, a technical defect of one o more of the electrolyzing cells, and/or the like. Such an event may be serious due to the fact that transistor-based converters are designed such to have the flyback diodes. Therefore, if the DC voltage dips caused by the before-mentioned event, this may cause the flyback diodes to operate in a continious conducting mode, which means that the electric converter may be caused to operate in diode conduction mode of the flyback diodes. In this modus, control of the operation of the electric converter may be lost, and may result in further increase of the DC electrolyzing current during the short-circuit event or the overcurrent event, respectively, on the DC side. Unfortunately, a tripping time of a circuit breaker on the DC side and/or the AC side is too lage to avoid damaging the electric converter.

Therefore, it is an object of the invention to provide a method and an electrolyzing plant, which may enhance avoiding damaging the electric converter in a short-circuit event or an overcurrent event, respectively, on the DC side.

As a solution, a method, and an electrolyzing plant according to the independent claims are proposed.

Further exemplary embodiments can be derived from the features of the dependent claims.

With regard to a generic method, it is especially proposed that a sensor device senses a value of the alternating secondary voltage and/or an alternating secondary current provided by the at least one secondary winding, wherein the sensor device provides a sensor signal in response to sensing, and a crowbar control apparatus processes the sensor signal submitted by the sensor device, and provides the trigger signal for the at least one crowbar circuit dependent on processing.

With regard to a generic electrolyzing plant, it is especially proposed that the electrolyzing plant comprises a sensor device configured to sense a value of the alternating secondary voltage and/or an alternating secondary current provided by the at least one secondary winding, wherein the sensor device is configured to provide a sensor signal in response to sensing, and a crowbar control apparatus configured to process the sensor signal submitted by the sensor device and to provide the trigger signal for the at least one crowbar circuit dependent on processing.

Among others, the invention considers that an overcurrent event, especially a short-circuit event, on the DC side may be transferred from the DC side of the at least one electric converter to the AC side of the at least one electric converter. The at least one crowbar circuit is connected with the AC side of the at least one electric converter. Triggering the at least one crowbar circuit may substantially reduce the alternating secondary voltage so that, in turn, the electric power transferred from the AC side to the DC side of the at least one electric converter can be reduced. This may allow reducing the risk of damage appearing at the at least one electric converter caused by the event as discussed above. The necessity of any sensor on the affected DC side to be used can be avoided for this purpose because the sensor device senses at the AC side only. Therefore, no consideration related to reliable operation of any sensor on the DC side that may be affected by the event, needs to be necessary. One additional substantial difference between the existing configurations of the art and the proposed invention may be that the present invention uses the configuration of a transformer, which may be an OLTC transformer, connected to the at least one electric converter using transistors as switching elements, wherein multiple power lines connected to the at least one secondary winding of the transformer are provided. The at least one crowbar circuit may be arranged between the at least one electric converter and the transformer and may use current transducers installed on the bushings of the at least one secondary winding of the transformer. The bushings of the at least one secondary winding of the transformer is connected with the at least one crowbar circuit. A high inrush current caused by the DC short circuit event may be detected, which affects the AC side as well. The sensor device enables the triggering of the at least one crowbar circuit faster than any other protection and directs the short circuit current to the at least one crowbar circuit. One crowbar functionality may be to enable an AC circuit breaker, which may be included by the at least one electric converter, to switch-off and, in this way, avoid damage of the power modules of the at least one electric converter or any other components. Another way could be the activation of the crowbar by defining a lower limit for the DC link voltage during operation. If the DC voltage is below a certain value during operation a short circuit can be expected. Benefit is that no delay for increase of AC current would be required.

The crowbar circuit may have one or more solid-state switching elements, especially one or more thyristors, that may be designed such that the solid-state switching element can conduct the secondary alternating electric current for a time period up to a circuit breaker being tripped. Consequently, damage to the electric converter, especially its transistors and/or its flyback diodes, can be reduced or completely avoided. Generally, a crowbar circuit may be an electrical circuit used for preventing an overvoltage or surge condition of an AC power supply unit from damaging the circuits attached to the power supply. According to the invention, it is not used for preventing an overvoltage or surge condition but for acting on a short-circuit or overcurrent event. The crowbar circuit operates by putting a short circuit or low resistance path across the secondary AC voltage, like dropping a crowbar across the output terminals of the secondary AC voltage. A crowbar circuit may be frequently implemented by using one or more thyristors, TRIACs, trisils or thyratrons as the shorting device. Once triggered, they usually may depend on the current-limiting circuitry of the transformer or, if that fails, a blowing of the line fuse or tripping of the circuit breaker.

The sensor device senses the value of the alternating secondary voltage and/or an alternating secondary current provided by the at least one secondary winding. When the transformer has more than only one secondary winding, the sensor device may be configured to sense the alternating secondary voltage and/or an alternating secondary current of each of the secondary windings. The sensor device may comprise one or more voltage sensors in order to sense the value of the alternating secondary voltage of the at least one secondary winding. Moreover, the sensor device may comprise one or more current sensors in order to sense the value of the alternating secondary current of the at least one secondary winding. These options may be combined. The sensor device may comprise a current transformer, a hall sensor, a voltage sensor, and/or the like. The sensor device may also comprise one or more electric arc sensors, which may be at least partially arranged at the DC side. The sensor device may provide the sensor signal as a digital electric signal or an analog electric signal. The sensor device may provide the sensor signal such that it includes data of only one of sensed value of the voltage sensors, the current sensors, and the electric arc sensors. Especially, the sensor signal may include data of all of the sensors.

In order to provide the trigger signal for the at least one crowbar circuit, the crowbar control apparatus is connected with the sensor device so that it can receive the sensor signal. The crowbar control apparatus may have a processing apparatus configured to process the sensor signal. Dependent on processing the crowbar control apparatus provides the trigger signal for the at least one crowbar circuit. Processing may comprise comparing the sensor signal with at least one predetermined reference value. The predetermined reference value may be provided by an operator or during manufacturing of the electrolyzing plant. The predetermined reference value may be chosen such that the crowbar control apparatus can reliably detect the overcurrent event or the short circuit event on the DC side. Processing may also comprise the use of mathematical methods, especially, statistic methods, in order to enhance reliability of processing.

The crowbar control apparatus may comprise an electric hardware circuitry in order to provide the required functionality. Moreover, the crowbar control apparatus may also comprise a programmable computer being configured to provide at least partially the required functionality. Also, a combination of a hardware circuitry and a programmable computer may be provided. The crowbar control apparatus may be in communication with the at least one crowbar circuit and the sensor device. Especially, the crowbar control apparatus may provide at least one trigger signal for at least one of the at least one crowbar circuit which enables the at least one crowbar circuit to short-circuit the at least one secondary alternating voltage dependent on the at least one trigger signal. In an exemplary embodiment, if more than one crowbar circuit is provided, the crowbar control apparatus provides trigger signals for all of the crowbar circuits. Also, it may be provided in an embodiment that the crowbar control apparatus is in communication with at least a voltage sensor and/or a current sensor of the sensor device sensing the alternating secondary voltage or the alternating secondary current at the AC side of the at least one electric converter, respectively, and, by processing the sensor signal, detecting the overcurrent event or the short-circuit event on the DC side.

The programmable computer or a computing apparatus, respectively, may in particular be understood as a data processing device, which comprises processing circuitry. The computing apparatus can therefore in particular process data to perform computing operations. This may also include operations to perform indexed accesses to a data structure, for example a look-up table (LUT).

In particular, the computing apparatus may include one or more computers, one or more microcontrollers, and/or one or more integrated circuits, for example, one or more application-specific integrated circuits (ASIC), one or more field-programmable gate arrays (FPGA), and/or one or more systems on a chip (SoC). The computing unit may also include one or more processors, for example one or more microprocessors, one or more central processing units (CPU), one or more graphics processing units (GPU), and/or one or more signal processors, in particular one or more digital signal processors (DSP). The computing apparatus may also include a physical or a virtual cluster of computers or other of said apparatuses.

In various embodiments, the computing unit includes one or more hardware and/or software interfaces and/or one or more memory apparatuses.

A memory apparatus may be implemented as a volatile data memory, for example a dynamic random access memory (DRAM), or a static random access memory (SRAM), or as a non-volatile data memory, for example a read-only memory (ROM), a programmable read-only memory (PROM), an erasable programmable read-only memory (EPROM), an electrically erasable programmable read-only memory (EEPROM), a flash memory or flash EEPROM, a ferroelectric random access memory (FRAM), a magnetoresistive random access memory (MRAM), or a phase-change random access memory (PCRAM).

According to an exemplary embodiment, it is proposed that the electrolyzing plant has a predetermined number of electric converters, wherein the transformer has a respective number of secondary windings, wherein each secondary winding is individually connected with the AC side of only one of the electric converters, wherein the sensor device is configured to sense the value of the alternating secondary voltage and/or the alternating secondary current at each of the bushings of the secondary windings and/or at each of the AC sides of the electric converters, wherein the crowbar control apparatus processes the sensor signal, especially, compares each of the sensed values with the at least one predetermined reference value. In this regard, the crowbar control apparatus may provide monitoring of overcurrent or short-circuit events individually for each of the DC sides of the electric converters. In this embodiment, the crowbar control apparatus may provide a trigger signal individually for the crowbar circuits. This may be advantageous when the electric converters can be operated individually.

However, when the electric converters shall be operated according to a common overall scheme, the crowbar control apparatus may provide monitoring of overcurrent or short-circuit events for all of the DC sides of the electric converters, and, once an overcurrent or short circuit event appears, the crowbar control apparatus may provide only one trigger signal common for all of the crowbar circuits so that all of the crowbar circuits can be triggered. In this regard, it is proposed that the electrolyzing plant has a respective number of crowbar circuits, wherein the AC side of each of the electric converters is connected with an individual one of the crowbar circuits, wherein the crowbar control apparatus commonly provides the trigger signal for all of the crowbar circuits dependent on processing.

According to another exemplary embodiment, it is proposed that triggering the at least one crowbar circuit by the trigger signal causes tripping of an AC circuit breaker connected with the primary winding of the transformer. Usually, the AC circuit breaker may be subjected to the alternating voltage of the electric power network. So, according to one embodiment, the AC circuit breaker may be comprised by the electrolyzing plant. In this regard, the AC circuit breaker may provide connection between the point of connection, on the one hand, and the primary winding of the transformer, on the other hand, depending on its switching status. Alternatively, it may be possible that the AC circuit breaker is included by the electric power network. In this regard, the point of connection may be subjected to the alternating voltage of the electric power network depending on its switching status. The AC circuit breaker may be in communication with the crowbar circuit and/or the crowbar control apparatus. The crowbar circuit and/or the crowbar control apparatus may be configured to provide a respective tripping signal, which may be submitted to the AC circuit breaker, in order to cause tripping of the AC circuit breaker. In one embodiment, the trigger signal may serve as the tripping signal at the same time. However, a separate tripping signal may be provided by processing the trigger signal. The AC circuit breaker may be adapted to the number of phases of the alternating voltage of the electric power network. For each of the phases, the AC circuit breaker may have a separate switching element. The switching elements of the AC circuit breaker may be operated commonly. However, the AC circuit breaker may be configured to be additionally tripped by another tripping signal that may be provided by the plant control apparatus, the converter control apparatus, a control station of the electric power network, and/or the like.

According to yet another exemplary embodiment, it is proposed that the sensor device is configured to sense the value of the alternating secondary voltage and/or the alternating secondary current at a bushing of the at least one secondary winding. This allows achieving an easy construction.

According to another exemplary embodiment, it is proposed that the sensor device is configured to sense the value of the alternating secondary voltage and/or the alternating secondary current at the AC side of the at least one electric converter. In this regard, an accurate reliable sensing can be achieved as a reaction at the AC side of the at least one electric converter can be sensed.

Moreover, according to another exemplary embodiment, it is proposed that the electrolyzing plant has a predetermined number of electric converters, wherein the transformer has a respective number of secondary windings, wherein each secondary winding is individually connected with the AC side of only one of the electric converters, wherein the sensor device is configured to sense the value of the alternating secondary voltage and/or the alternating secondary current at each of the bushings of the secondary windings and/or at each of the AC sides of the electric converters. Sensing can be provided only at the bushings of the transformer or only at the AC side of the at least one electric converter. However, both can be provided. Also, it may be provided that only the value of the alternating secondary voltage is sensed. Sensing of the alternating secondary current may be provided additionally or alternatively. The options may depend on the design of the electrolyzing plant, especially, its internal power network. A high flexibility can be achieved.

According to yet another exemplary embodiment, it is proposed that the electrolyzing plant has a respective number of crowbar circuits, wherein the AC side of each of the electric converters is connected with a respective one of the crowbar circuits, wherein the DC sides of the electric converters are connected in parallel, wherein the crowbar control apparatus is configured to provide only one trigger signal common for all of the crowbar circuits. This embodiment considers that energy conversion may be provided by more than only one electric converter, wherein the electric converters may be operated substantially in parallel. Especially, their AC sides may be connected to individual secondary windings of the transformer. The secondary windings may be electrically insulated from each other. In this regard, it may be advantageous when each AC side of each electric converter is connected with an individual crowbar circuit.

According to another exemplary embodiment, it is proposed that the at least one crowbar circuit has at least one solid-state switching element, which is configured to be triggered by the trigger signal. The solid-state switching element may comprise one or more transistors. The solid-state switching element allows a very fast reaction of the crowbar circuit. The solid-state switching element can comprise one or more thyristors, transistors, and/or the like. The crowbar circuit, especially the at least one solid-state switching element, is configured to have two switching statuses, namely, a switched-on status and a switched-off status. A current status of the crowbar circuit is the switched-off status. Only if the crowbar circuit is subjected to the trigger signal, the switching status of the crowbar circuit changes to the switched-on status. The trigger signal may affect the at least one solid-state switching element.

According to yet another exemplary embodiment, it is proposed that the crowbar control apparatus and the sensor device are configured to operate at least independent from the at least one electric converter. Insofar, the crowbar control apparatus and the sensor device can still operate when energy supply for control apparatuses is affected by the short-circuit event or the overcurrent event. An independent energy may be provided for the crowbar control apparatus and the sensor device. Moreover, the crowbar control apparatus and the sensor device may be decoupled from function of communication links and/or communication devices of the electrolyzing plant. So, the crowbar control apparatus and the sensor device may have their independent communication system.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Advantages and effects of the inventive method also apply to the inventive electrolyzing plant and vice versa. Therefore, method features may also be expressed as apparatus features and vice versa.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic block diagram showing a first exemplary electrolyzing plant,
FIG 2 a schematic block diagram as FIG 1 showing a second exemplary electrolyzing plant having fuses at a DC side of an electric converter of the electrolyzing plant,
FIG 3 a schematic block diagram as FIG 1 showing a third exemplary electrolyzing plant having a fuse at an AC side of the electric converter of the electrolyzing plant,
FIG 4 a schematic block diagram as FIG 1 showing a fourth exemplary electrolyzing plant having a crowbar circuit at the AC side of the electric converter of the electrolyzing plant,
FIG 5 a schematic circuit diagram showing a first embodiment of the crowbar circuit according to FIG 4 in more detail,
FIG 6 a schematic block diagram showing a fifth electrolyzing plant,
FIG 7 a schematic block diagram showing a sixth electrolyzing plant,
FIG 8 a schematic block diagram showing a seventh electrolyzing plant, and
FIG 9 shows a schematic circuit diagram showing a second embodiment of the crowbar circuit according to FIG 4 in more detail.

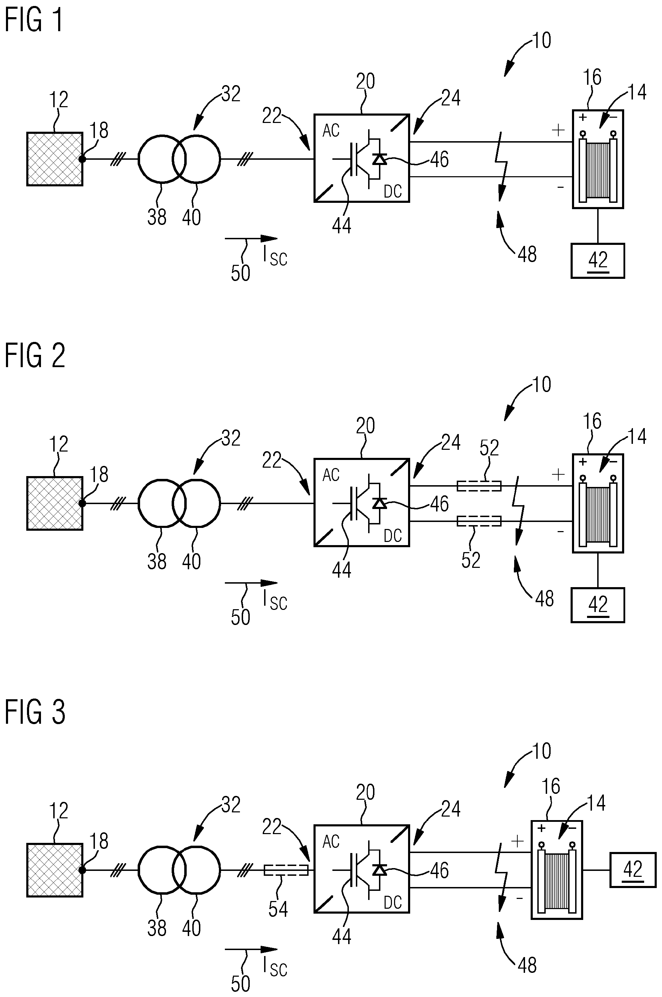

FIG 1 shows a schematic block diagram showing a first electrolyzing plant 10. The electrolyzing plant 10 has plural electrolyzing cells 14, which are arranged in a stack 16. The electrolyzing cells 14 are configured to electrolyze water by providing an electrolyzing process. The electrolyzing process is performed by the electrolyzing cells 14 in response to being subjected to a DC electrolyzing power.

The electrolyzing plant 10 also has a point of connection 18, which is configured to be connected with an electric power network 12, in order to supply the electrolyzing plant 10 with electric power from the electric power network 12. The electric power network 12 deploys an alternating voltage having a rated frequency. The alternating voltage is a three-phase voltage in the present embodiment. In the present embodiment, the rated frequency has a value of about 50 Hz. In alternative embodiments, the rated frequency may have a value of about 60 Hz, about 400 Hz, or the like. It should be note that the invention is not limited by the alternating voltage being a three-phase alternating voltage. The alternating voltage may have any number phases, especially, only one phase, wherein the invention stays applicable as well.

The electrolyzing plant 10 further comprises an electric converter 20 having an AC side 22 electrically connected with the point of connection 18, in order to receive the electric power from the electric power network 12. Moreover, the converter 20 has a DC side 24 connected with the electrolyzing cells 14, wherein the DC side 24 is configured to provide the electrolyzing cells 14 with the DC electrolyzing power in response to the AC side 22 receiving the electric power. At the DC side 24, the electric converter 20 provides a DC electrolyzing voltage and a DC electrolyzing current. The DC electrolyzing voltage is selected such that the stack 16 of the electrolyzing cells 14 can be subjected to the electrolyzing voltage so that each of its electrolyzing cells 14 is subjected to a respective portion of the DC electrolyzing voltage, in order to provide a proper electrolyzing process. In the stack 16, the electrolyzing cells 14 are electrically arranged in series. Therefore, in this embodiment, each of the electrolyzing cells 14 is subjected to the same DC electrolyzing current.

Moreover, the electrolyzing plant 10 has an operating device 42, which is configured to supply the electrolyzing cells 14 with an agent to be electrolyzed, which is in the present embodiment formed by water. Moreover, the operating device 42 is configured to discharge the products produced in response to electrolyzing the water, which is in the present embodiment hydrogen and oxygen. The operating device 42 may comprise respective piping, in order to allow at least supplying and discharging. The operating device 42 may further comprise heating and/or cooling apparatuses, additional sensors and/or the like, in order to provide a proper operation of the stack 16 of the electrolyzing cells 14.

The electrolyzing plant 10 has a transformer 32 establishing the connection between the AC side 22 of the electric converter 20 and the point of connection 18. In this regard, the transformer 32 has a primary winding 38 and a secondary winding 40. The windings 38, 40 are designed as three-phase windings, in order to be subjected to the three-phase alternating voltage of the electric power network 12. The primary winding 38 is connected with the point of connection 18. The secondary winding 40 is connected with the AC side 22 of the electric converter 20. So, the electric converter 20 can be subjected to a transformed voltage, which is adapted to a rated configuration of the electric converter 20.

During a running electrolyzing process, the electric converter 20 receives electric power from the electric power network 12 via the point of connection 18 and the transformer 32. The electric converter 20 converts the electric power to an electric power deploying the DC electrolyzing voltage and the DC electrolyzing current. This is provided at the DC side 24 of the electric converter 20. So, the electrolyzing cells 14 of the stack 16 can be supplied with electric energy, in order to allow the electrolyzing process.

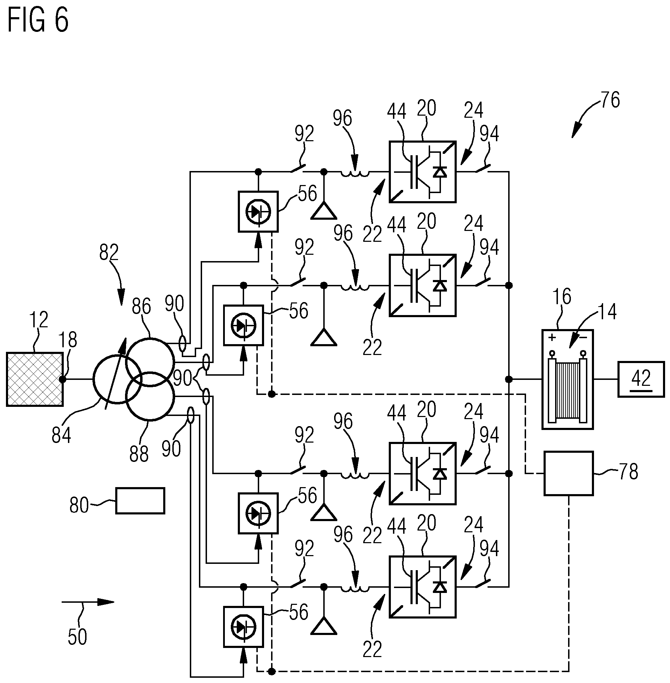

In the present embodiment, the electric converter 20 has IGBT's 44 as switching elements for providing a rectifying operation in order to convert the electric power. Each of the IGBT's 44 has a flyback diode 46 connected in parallel with the respective IGBT 44. As well known to those skilled in the art, the IGBT's 44 are driven by switching signals provided by a converter control apparatus (not shown) of the electric converter 20. The converter control apparatus provides the switching signals according to a suited pulse-width-modulation (PWM) scheme. The converter control apparatus is in communication with a plant control apparatus of the electrolyzing plant 10 controlling the overall operation of the electrolyzing process (see FIG 6).

In FIG 1, a short-circuit event 48 at the DC side 24 is indicated by an arrow. The DC electrolyzing current increases to a very high value in a very short time period of about some ms or less. A specific disadvantage of this design is that inductors (not show) of the electric converter 20, which cooperate with the IGBT's 44 for establishing energy conversion, may come into saturation so that no current limiting effect may appear. Moreover, the flyback diodes 46 go into the conducting status causing loose of control of the operation of the electric converter 20. In response, a short-circuit alternating current 50 appears at the AC side 22 of the electric converter 20. In this design, only a circuit breaker may allow interrupting the short-circuit alternating current 50. However, a reaction time of a usual circuit breaker is so long that damage of the IGBT's 44 and the flyback diodes 46 usually cannot be avoided. This causes a high expend for overhauling the electric converter 20 in addition to repair of the DC side 24 with regard to the short-circuit event 48.

FIG 2 shows a schematic electric circuitry of a second electrolyzing plant 10, which based on the design of the first electrolyzing plant 10 acccording to FIG 1, which is why it is additionally referred to the details as noted above with regard to the the first electrolyzing plant 10 acccording to FIG 1. Differing from the electrolyzing plant 10 according to FIG 1 and in order to improve the conditions to react on the short-circuit event 48, the DC side 24 has DC fuses 52. The DC fuses 52 shall improve the reaction especially with regard to the short-circuit event 48.

However, a tripping time of the DC fuses 52 usually may also not be sufficient in order to avoid damage to the IGBT's 44 and the flyback diodes 46. Moreover, the electric converter 20 is still subjected to the alternating secondary voltage even if the DC fuses 52 are tripped.

FIG 3 shows a schematic electric circuitry of a third electrolyzing plant 10, which based on the design of the first electrolyzing plant 10 acccording to FIG 1, which is why it is additionally referred to the details as noted above with regard to the the first electrolyzing plant 10 acccording to FIG 1. Differing from the electrolyzing plant 10 according to FIG 1 and in order to improve the conditions to react on the short-circuit event 48, the AC side 22 has an AC fuse 54. The AC fuse 54 shall improve the reaction especially with regard to the short-circuit event 48.

However, a tripping time of the AC fuse 54 usually may also not be sufficient in order to avoid damage to the IGBT's 44 and the flyback diodes 46. Contrary to the second electrolyzing plant 10 according to FIG 2, the electric converter 20 is also disconnected from the alternating secondary voltage if the AC fuse 54 is tripped.

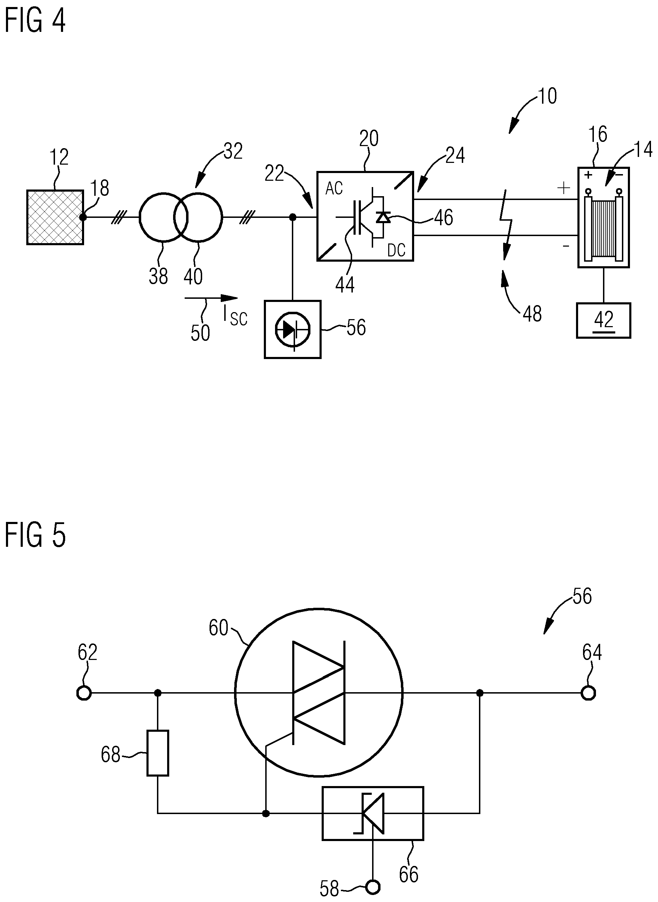

Fig 4 shows a schematic electric circuitry of a fourth electrolyzing plant 10, which based on the design of the first electrolyzing plant 10 acccording to FIG 1, which is why it is additionally referred to the details as noted above with regard to the the first electrolyzing plant 10 acccording to FIG 1. Differing from the electrolyzing plant 10 according to FIG 1 and in order to improve the conditions to react on the short-circuit event 48, the AC side 22 has a crowbar circuit 56. The crowbar circuit 56 shall improve the reaction especially with regard to the short-circuit event 48. The crowbar circuit 56 may react fast on a suitable trigger signal. Insofar, the use of the crowbar circuit 56 may enhance the reaction on the short-circuit event 48.

Regarding the reaction time only, it may be possible to prevent the IGBT's 44 and the flyback diodes 46 from being impaired by the short-circuit event 48. However, the crowbar circuit 56 may usually controlled by the converter control apparatus or the plant control, apparatus. Insofar, providing the trigger signal may be affect such that no or a not suited trigger signal could be provided. This may result in a situation as already detailed above with regard to FIG 1.

FIG 5 shows a schematic circuit diagram showing a first embodiment of the crowbar circuit according to FIG 4 in more detail. As can be derived from FIG 5, the crowbar circuit 56 comprises a first connector 62 and a second connector 64. The connector 62, 64 are connected with the respective connectors of the AC side 22 of the electric converter 20 in FIG 4. The connectors 62, 64 are connected with main terminals of a TRIAC 60. Parallel connected with the TRIAC 60 is a resistor 68 and a trigger apparatus 66, which, in turn, are connected in series. The trigger apparatus 66 has a trigger signal input 58 connected with the converter control apparatus or the plant control apparatus, respectively. If the converter control apparatus or the plant control apparatus, respectively, detects the short-circuit event 48, it subjects the trigger signal input 58 with a trigger signal in order to trigger the crowbar circuit 56. If triggered, the secondary alternating voltage breaks down so that a main circuit breaker (not shown) of the electric power network 12 may trip. However, functionality of this design depends on the converter control apparatus or the plant control apparatus, respectively, being not affected by the short-circuit event 48. Moreover, only one electric converter 20 may be protected.

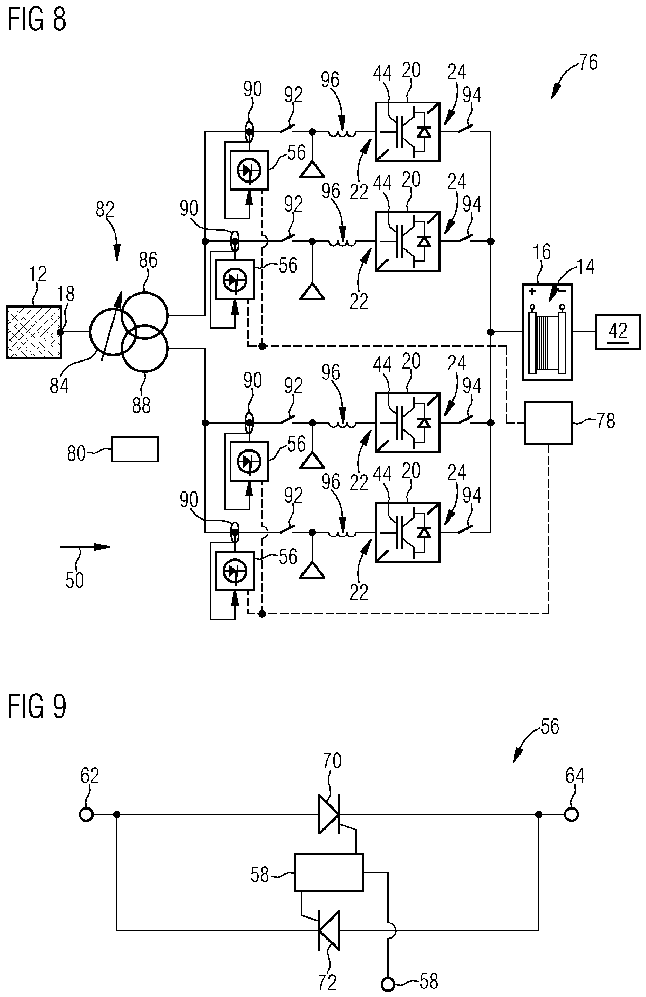

FIG 9 shows a schematic circuit diagram showing a second embodiment of the crowbar circuit 56 according to FIG 4 in more detail. As can be derived from FIG 9, the crowbar circuit 56 also comprises a first connector 62 and a second connector 64. The connector 62, 64 are connected with two thyristors 70, 72, which are connected with each other in parallel. Gate electrodes of the thyristors 70, 72 are connected with trigger apparatus 74 providing respective gate impulses for controlling the thyristors 70, 72. The trigger apparatus 74 is connected with a trigger signal input 58 connected with the converter control apparatus or the plant control apparatus, respectively. Triggering may be substantially achieved similar to the before-described embodiment of the first crowbar circuit 56 according to FIG 5. In this regard, the crowbar circuit 56 according to FIG 5 may be replaced by the crowbar circuit 56 according to FIG 9.

FIG 6 shows a schematic block diagram showing a fifth electrolyzing plant 76. The design of the electrolyzing plant 76 is generally based on the design of the first electrolyzing plant 10 according to FIG 1, which is why it is additionally referred to this embodiment. The following specification refers only to the differences with regard to the first electrolyzing plant 10 according to FIG 1.

Differing from the first electrolyzing plant 10 according to FIG 1, a transformer 82 is provided instead of the transformer 32 according to FIG 1, wherein the transformer 82 has one primary winding 84 connected with the point of connection 18. The primary winding 84 has taps, which are connected with an on-load-tap-changer 80 (OLTC), in order to adapt the primary winding 84 to a current value of the alternating voltage of the electric power network 12. The transformer 82 has two secondary windings 86, 88.

Moreover, the electrolyzing plant 76 has four electric converters 20, which are configured to operate substantially in parallel. Hence, the DC sides 24 of the electric converters 20 are connected in parallel via are respective DC circuit breaker 94. Each of the secondary windings 86, 88 is connected with two of the AC sides 22 of respective two electric converters 20 via a particular AC circuit breaker 92 allocated to each of the four electric converters 20. Each of the four electric converters 20 is designed substantially such as detailed above with regard to FIG 1.

Moreover, a filter circuit 96 is connected between any of the AC sides 22 of the respective electric converters 20 and the respective allocated AC circuit breakers 92.

For each of the electric converters 20, a crowbar circuit 56 is provided. With regard to their operation, it is additionally referred to the details according to FIG 1. Additionally, the electrolyzing plant 76 has a crowbar control apparatus 78. The crowbar control apparatus 78 is connected with each of the crowbar circuits 56, in order to subject them to a trigger signal. For this purpose, the trigger signal input 58 is connected with the crowbar control apparatus 78.

The electrolyzing plant 76 has four current sensors 90 forming a sensor device. A respective one of the current sensors 90 is configured to sense the secondary alternating current of an AC side 22 of the respective electric converter 20. The current sensors 90 provide a respective current signal as a sensor signal, which is submitted to the crowbar control apparatus 78. The crowbar control apparatus 78 processes the sensor signal submitted by the sensor device 90, and provides the trigger signal for all of the crowbar circuits 56 dependent on processing. In this embodiment, the crowbar control apparatus 78 provides only one common trigger signal for all of the crowbar circuits 56. Therefore, if the trigger signal is provided by the crowbar control apparatus 78, all crowbar circuits 56 will be triggered. So, when a short-circuit event appears at the DC sides 24 of the electric converters 20, triggering of the crowbar circuits 56 may prevent the electric converters 20 from damage.

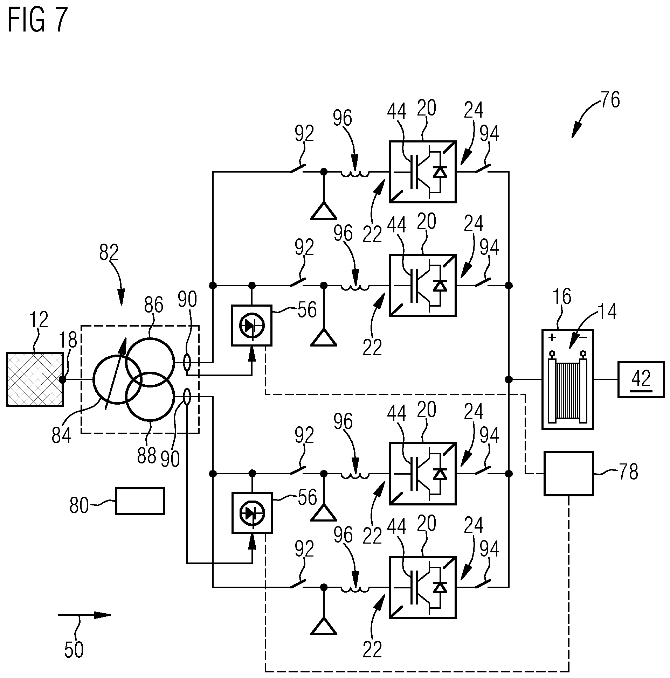

FIG 7 shows a schematic block diagram showing a sixth electrolyzing plant 76. The design of the electrolyzing plant 76 is generally based on the design of the fifth electrolyzing plant 76 according to FIG 6, which is why it is additionally referred to this embodiment. The following specification refers only to the differences with regard to the fifth electrolyzing plant 76 according to FIG 6.

The configuration of the secondary windings 86, 88 of the transformer 82 is considered, and different confirmation of the crowbar circuits 56 can be obtained. If a busbar system is split at the output of the secondary windings 86, 88, the current sensors 90 can be installed, where the busbars of the secondary windings 86, 88 are still merged inside the transformer 82 and, in this case, each secondary side requires only one crowbar circuit 56. Additionally, one or more could be installed in a housing of the electric converters 20, configured to also trigger the crowbar circuits 56. Those arc sensors may detect arcs at the early beginning, sometimes even before the current rises over the limit. In case, the bushings of the secondary windings 86, 88 are equipped with the current sensor 90, every power line needs protection. This is because not in every case the electric converter 20 are in operation.

This embodiment differs from the embodiment according to FIG 6 that only two current sensors 90 are provided. Each of the two current sensors 90 senses the alternating secondary current of two of the electric converters 20, which AC sides 22 are connected in parallel via the respective AC circuit beaker 92. Generally, the function as detailed above maintains.

FIG 8 shows block diagram showing a seventh electrolyzing plant 76. The design of the electrolyzing plant 76 is generally based on the design of the fifth electrolyzing plant 76 according to FIG 6, which is why it is additionally referred to this embodiment. The following specification refers only to the differences with regard to the fifth electrolyzing plant 76 according to FIG 6.

The seventh embodiment of the electrolyzing plant 76 differs from the embodiment according to FIG 6 at least by the feature that the current sensors 90 are connected with the respective AC sides 22 at respective connection points, where the crowbar circuits 56 are connected with the respective AC sides 22 or the busbar systemof the secondary windings 86, 88, respectively. The general function corresponds to that already detailed with regard to FIG 6.

Generally, based on normal design characteristics, the short circuit event tranferred to the AC side 22 is managed by the transformer 82, since it can withstand any short circuit event up to several seconds. If the situation persists, a switchgear at the primary side of the transformer 82 may enable the protection of the entire power supply but with a reduced reaction time.

The embodiments described above shall be regarded only for further explanation of the invention and shall not be regarded as limiting the scope.

## Claims

1. A method of controlling an electrolyzing plant (76) having plural electrolyzing cells (14), especially configured to electrolyze water by providing an electrolyzing process, wherein the electrolyzing cells (14) perform the electrolyzing process in response to being subjected to a DC electrolyzing power, wherein the electrolyzing plant (76) is supplied with electric power received via a point of connection (18) of the electrolyzing plant (76) connected with an electric power network (12), wherein the electric power network (12) deploys an alternating voltage for providing the electric power, wherein a primary winding (84) of a transformer (82) of the electrolyzing plant (76) is connected with the point of connection (18), in order to be subjected to the alternating voltage, wherein at least one secondary winding (86, 88) of the transformer (82) provides an alternating secondary voltage, wherein an AC side (22) of at least one electric converter (20) of the electrolyzing plant (76) is electrically connected with the at least one secondary winding (86, 88) in order to receive the electric power, wherein a DC side (24) of at least one electric converter (20) connected with the electrolyzing cells (14) provides the DC electrolyzing power in response to the AC side (22) receiving the electric power, wherein the at least one electric converter (20) establishes energy conversion from the AC side (22) to the DC side (24) by operating at least one transistor (44) in a switch mode, wherein at least one crowbar circuit (56) connected with the AC side (22) of the at least one electric converter (20) is triggered by a trigger signal,
**characterized in that**
a sensor device (90) senses a value of the alternating secondary voltage and/or an alternating secondary current provided by the at least one secondary winding (86, 88), wherein the sensor device (90) provides a sensor signal in response to sensing, and a crowbar control apparatus (78) processes the sensor signal submitted by the sensor device (90), and provides the trigger signal for the at least one crowbar circuit (56) dependent on processing.

2. The method according to claim 1, **characterized in that** the electrolyzing plant has a predetermined number of electric converters (20), wherein the transformer (82) has a respective number of secondary windings (86, 88), wherein each secondary winding (86, 88) is individually connected with the AC side (22) of only one of the electric converters (20), wherein the sensor device (90) is configured to sense the value of the alternating secondary voltage and/or the alternating secondary current at each of the bushings of the secondary windings (86, 88) and/or at each of the AC sides (22) of the electric converters (20), wherein the crowbar control apparatus (78) processes each of the sensed values with the at least one predetermined reference value.

3. The method according to claim 1 or 2, **characterized in that** the electrolyzing plant (76) has a respective number of crowbar circuits (56), wherein the AC side (22) of each of the electric converters (20) is connected with an individual one of the crowbar circuits (56), wherein the crowbar control apparatus (78) commonly provides the trigger signal for all of the crowbar circuits (56) dependent on processing.

4. The method according to any of the preceding claims, **characterized in that** triggering the at least one crowbar circuit (56) by the trigger signal causes tripping of an AC circuit breaker connected with the primary winding (84) of the transformer (82).

5. An electrolyzing plant (76) having
- plural electrolyzing cells (14), especially configured to electrolyze water by providing an electrolyzing process, wherein the electrolyzing cells (14) perform the electrolyzing process in response to being subjected to a DC electrolyzing power,
- a point of connection (18) configured to be connected with an electric power network (12), wherein the electric power network (12) deploys an alternating voltage for providing the electric power, in order to supply the electrolyzing plant (10) with electric power received via the point of connection (18),
- a transformer (82) having a primary winding (86, 88) connected with the point of connection (18), in order to be subjected to the alternating voltage, and at least one secondary winding (86, 88) providing an alternating secondary voltage,
- at least one electric converter (20) having an AC side (22) connected with the at least one secondary winding (86, 88) in order to receive the electric power, wherein the DC side (24) is connected with the electrolyzing cells (14) and provides the DC electrolyzing power in response to the AC side (22) receiving the electric power, wherein the at least one electric converter (20) has at least one transistor (44) operated in a switch mode in order to establish energy conversion from the AC side (22) to the DC side (24),
- at least one crowbar circuit (56) connected with the AC side (22) of the at least one electric converter (20), wherein the at least one crowbar circuit (56) is configured to be triggered by a trigger signal,
**characterized by**
- a sensor device (90) configured to sense a value of the alternating secondary voltage and/or an alternating secondary current provided by the at least one secondary winding (86, 88), wherein the sensor device (90) is configured to provide a sensor signal in response to sensing, and
- a crowbar control apparatus (78) configured to process the sensor signal submitted by the sensor device (90), and to provide the trigger signal for the at least one crowbar circuit (56) dependent on processing.

6. The electrolyzing plant according to claim 5, **characterized in that** the sensor device (90) is configured to sense the value of the alternating secondary voltage and/or the alternating secondary current at a bushing of the at least one secondary winding (86, 88).

7. The electrolyzing plant according to claim 5 or 6, **characterized in that** the sensor device (90) is configured to sense the value of the alternating secondary voltage and/or the alternating secondary current at the AC side (22) of the at least one electric converter (20).

8. The electrolyzing plant according to any of the claims 5 through 7, **characterized in that** the electrolyzing plant (76) has a predetermined number of electric converters (20), wherein the transformer (82) has a respective number of secondary windings (86, 88), wherein each secondary winding (86, 88) is individually connected with the AC side (22) of only one of the electric converters (20), wherein the sensor device (90) is configured to sense the value of the alternating secondary voltage and/or the alternating secondary current at each of the bushings of the secondary windings (86, 88) and/or at each of the AC sides (22) of the electric converters (20).

9. The electrolyzing plant according to claim 8, **characterized by** a respective number of crowbar circuits (56), wherein the AC side (22) of each of the electric converters (20) is connected with a respective one of the crowbar circuits (56), wherein the DC sides (22) of the electric converters (20) are connected in parallel, wherein the crowbar control apparatus (78) is configured to provide only one trigger signal common for all of the crowbar circuits (56).

10. The electrolyzing plant according to any of the claims 5 through 9, **characterized in that** the at least one crowbar circuit (56) has at least one solid-state switching element (44), which is configured to be triggered by the trigger signal.

11. The electrolyzing plant according to any of the claims 5 through 10, **characterized in that** the crowbar control apparatus (78) and the sensor device (90) are configured to operate at least independent from the at least one electric converter (20).
